# EUROPEAN PATENT APPLICATION

(11) **EP 4 340 441 A1**
(43) Date of publication of application: **20.03.2024**
(21) Application number: 23204612.8
(22) Date of filing: 09.10.2019
(51) Int. Cl.: H04W 24/10, H04W 52/02, H04W 76/16, H04W 88/06

(54) **COMMUNICATION DEVICE, COMMUNICATION DEVICE CONTROL METHOD, AND PROGRAM**

(30) Priority: 18.10.2018 JP 2018196884
(62) Divisional of application: 19872458.5
(71) Applicant: CANON KABUSHIKI KAISHA, Tokyo 146-8501 (JP)
(72) Inventor: NAKAJIMA, Takafumi, Tokyo (JP)
(74) Representative: WESER & Kollegen Patentanwälte PartmbB

(57) **Abstract**

A communication apparatus (301) capable of performing communication with one or more base stations (302, 303) comprises reception means (202) for receiving information transmitted from a base station, transmission means (201) for transmitting based on the received information, in a case where a first user setting is set to the communication apparatus (301), first information indicating a quality of a signal received from a base station of an LTE communication system conforming to a 3GPP (Third Generation Partnership Project) standard and second information indicating a quality of a signal received from a base station of a 5G communication system conforming to the 3GPP standard, to a main base station to which the communication apparatus establishes a connection, a base station of the LTE communication system conforming to the 3GPP, and establishing means for establishing a connection for data communication with a secondary base station of the 5G communication system conforming to the 3GPP standard in response to receiving a predetermined signal from the master base station after transmitting the second information. In a case where a second user setting is set to the communication apparatus (301), the transmission means does not transmit the second information, to the main base station, indicating a quality of a signal received from the base station of the 5G communication system conforming to the 3GPP standard even in a case where the communication apparatus is located in a location near the base station of the 5G communication system conforming to the 3GPP standard.

## Description

### TECHNICAL FIELD

The present invention relates to a communication apparatus, a control method for a communication apparatus, and a program.

### BACKGROUND ART

The 3rd generation partnership project (3GPP) release 12 (Rel-12) standard specifies Dual connectivity (DC) that allow simultaneous communication with a plurality of base stations. The Dual connectivity allows User Equipment (UE) to perform simultaneous transmission using Component Carriers (CCs) provided by the plurality of base stations, thus increasing the user throughput (PTL1). Specifically, the UE divides one Evolved Packet System (EPS) bearer or packet sequence, and simultaneously transmits the divided packet sequences to the CCs provide by the plurality of base stations. More specifically, the UE transmits the divided packet sequences to a master base station serving as a master node (MN), and a secondary base station serving as a secondary node (SN). After receiving the packets, the master base station or the secondary base station reconfigures the packet sequences from the UE by reordering its own received packet sequence, and the packet sequence received from the other base station. After reconfiguring the packet sequence, the master base station or the secondary base station transfers the reconfigured packet sequence to a core node (CN).

5G, which is the next generation communication standard currently being formulated in 3GPP, also specifies DC that can be used in a non-standalone mode in which 5G and Long Term Evolution (LTE), which are different wireless systems, cooperate with each other. This allows UE to simultaneously perform LTE communication and 5G communication, whereby the user throughput is improved.

### CITATION LIST

### PATENT LITERATURE

PTL 1: Japanese Patent Laid-Open No. 2016-127383

### SUMMARY OF INVENTION

### TECHNICAL PROBLEM

As described above, when UE simultaneously performs LTE communication and 5G communication, the performance can be expected to be enhanced by DC. On the other hand, the power consumption is expected to be increased as a result of performing data communication by simultaneously using communication circuits for the plurality of systems. For example, when a digital camera as UE uploads captured images to a server by simultaneously performing LTE communication and 5G communication, the digital camera may run out of battery earlier than when using only LTE communication. That is, when the digital camera is in the state of constantly activating DC, the digital camera may run out of battery early. This reduces the usability by the user because the image capturing function, which is the major function of the digital camera, can no longer be used.

### SOLUTION TO PROBLEM

In view of the above-described problem, the present disclosure provides a technique for controlling the function of Dual connectivity, taking power consumption into consideration.

As one means for achieving the above-described object, a communication apparatus according to the present invention includes the following configuration. That is, a communication apparatus capable of performing data communication with one or more base stations, includes: determination means for determining whether or not to also perform communication with a secondary base station, in addition to a master base station, for the data communication; measurement means for measuring a first quality, which is a quality of a signal received from the master base station, and a second quality, which is a quality of a signal received from the secondary base station; and transmission means for transmitting a measurement report including the first quality and the second quality to the master base station if it is determined by the determination means to also perform communication with the secondary base station, and transmitting a measurement report including the first quality and not including the second quality to the master base station if it is determined by the determination means not to perform communication with the secondary base station.

### ADVANTAGEOUS EFFECTS OF INVENTION

According to the present invention, it is possible to control the function of Dual connectivity, taking power consumption into consideration.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a diagram showing an exemplary hardware configuration of a digital camera according to an embodiment.
FIG. 2 is a diagram showing an exemplary software functional configuration of the digital camera according to the embodiment.
FIG. 3 is a diagram showing an exemplary network configuration according to the embodiment.
FIG. 4 is an operation flowchart of DC start processing according to the embodiment.
FIG. 5 is an operation flowchart of DC stop processing according to the embodiment.
FIG. 6 is a diagram showing an operation sequence performed in the digital camera and two base stations according to the embodiment.

### DESCRIPTION OF EMBODIMENTS

Hereinafter, the present invention will be described in detail based on an exemplary embodiment thereof. It should be appreciated that the configurations in the following embodiment are merely illustrative, and the present invention is not limited to the configurations shown in the drawings.

### (Network Configuration)

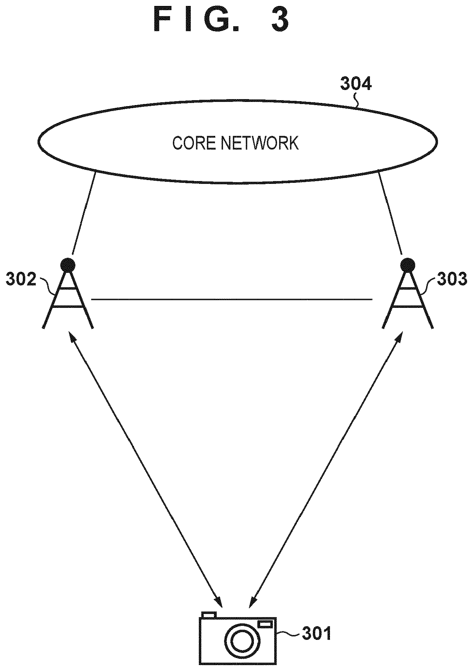

FIG. 3 shows an exemplary network configuration according to the present embodiment. The network configuration shown in FIG. 3 is composed of a digital camera 301, an LTE base station 302, and a 5G base station 303. The LTE base station 302 is capable of performing communication in accordance with an LTE communication system conforming to a 3GPP standard, and the 5G base station 303 is capable of performing communication in accordance with a 5G communication system conforming to the 3GPP standard. The digital camera 301 serving as UE is located in each of the cells (communicable ranges) of the LTE base station 302 and the 5G base station 303, and supports the Dual connectivity (DC) capability of simultaneously communicating with these base stations. In the present embodiment, the digital camera 301 transmits captured image data to the LTE base station 302 and the 5G base station 303 using DC in order to upload the captured image data to a network apparatus (not shown) such as a server connected to a core network 304. The LTE base station 302 and the 5G base station 303 transmit the captured image data received from the digital camera 301 to the network apparatus (not shown) connected to the core network 304.

In the present embodiment, the LTE base station 302 functions as a master base station (MN), and the 5G base station 303 functions as a secondary base station (SN). In DC communication, the LTE base station 302 serving as the master base station controls simultaneous communication between the digital camera 301, and the LTE base station 302 and the 5G base station 303, and also controls communication between the digital camera 301 and the upper core network 304.

### (Configuration of Digital Camera)

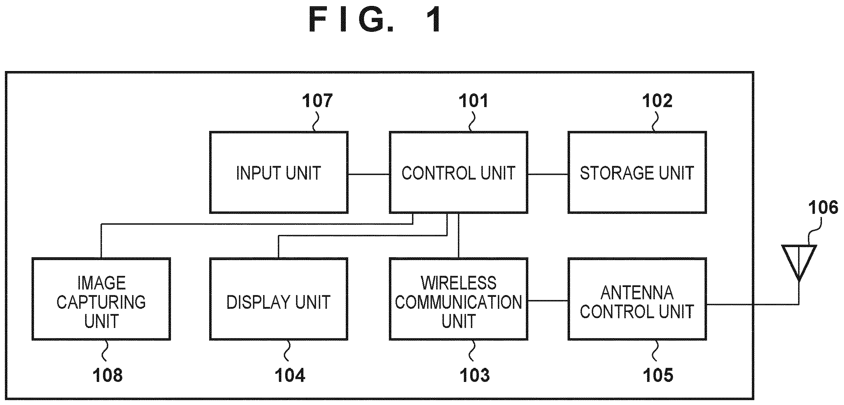

FIG. 1 shows an exemplary hardware configuration of the digital camera 301 according to the present embodiment. The digital camera includes, as an exemplary hardware configuration, a control unit 101, a storage unit 102, a wireless communication unit 103, a display unit 104, an antenna control unit 105, an antenna 106, an input unit 107, and an image capturing unit 108. The control unit 101 performs overall control of the digital camera 301 by executing a control program stored in the storage unit 102. The storage unit 102 stores the control program executed by the control unit 101, and various types of information such as captured image data, communication parameter(s), and authentication information. The communication parameter(s) and authentication information may be used when connecting with the LTE base station 302 and the 5G base station 303. Various operations of the digital camera 301, which will be described later, may be performed by the control unit 101 executing the control program stored in the storage unit 102. The wireless communication unit 103 performs cellular network communication using LTE, 5G, or the like, or wireless communication using Wi-Fi or the like. The display unit 104 has a function capable of outputting visually recognizable information, such as that of an LCD or an LED, or a function capable of outputting sound, such as that of a speaker, and performs various displays. The antenna control unit 105 controls the antenna 106 in order to perform wireless communication. The input unit 107 has an operational function for operating the digital camera 301, and receives various inputs/operations or the like performed by the user. The input unit 107 and the display unit 104 may also be configured as a user interface (UI) by being combined so as to function together. The image capturing unit 108 has an image capturing function, and performs image capturing processing to generate captured image data.

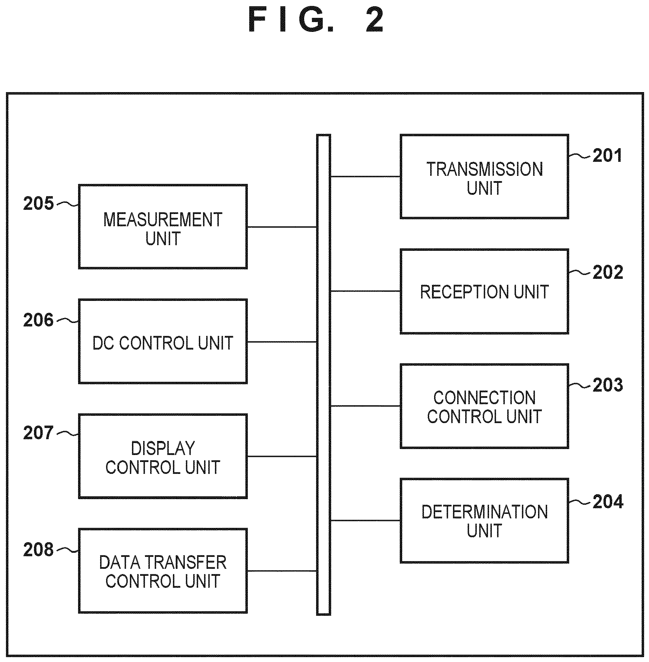

FIG. 2 shows an exemplary software functional configuration of the digital camera 301 according to the present embodiment. The digital camera includes, as an exemplary software functional configuration, a transmission unit 201, a reception unit 202, a connection control unit 203, a determination unit 204, a measurement unit 205, a DC control unit 206, a display control unit 207, and a data transfer control unit 208.

The transmission unit 201 and the reception unit 202 each transmit signals (e.g., various types of messages/information and captured image data) to a counterpart apparatus via the wireless communication unit 103, and receive signals (e.g., various types of messages/information). The connection control unit 203 performs control and management relating to connection with the LTE base station 302 and the 5G base station 303. The determination unit 204 determines whether or not execution of DC by the digital camera 301 is necessary. The measurement unit 205 measures the quality of the radio environment by performing measurement processing for the signals received from the LTE base station 302 and the 5G base station 303 via the reception unit 202. The DC control unit 206 controls execution of DC by the digital camera 301, based on the signals or the like received by the reception unit 202. For example, the DC control unit 206 determines, for example, whether or not execution of DC by the digital camera 301 is possible, or whether or not the digital camera 301 is executing DC, and performs processing according to the determination. The display control unit 207 performs control relating to displays on the display unit 104. When the display unit 104 functions as an UI together with the input unit 107, the display control unit 207 may perform control for that UI. The data transfer control unit 208 performs control and management of transmission (transfer) of the captured image data stored in the storage unit 102.

### (Flow of Processing)

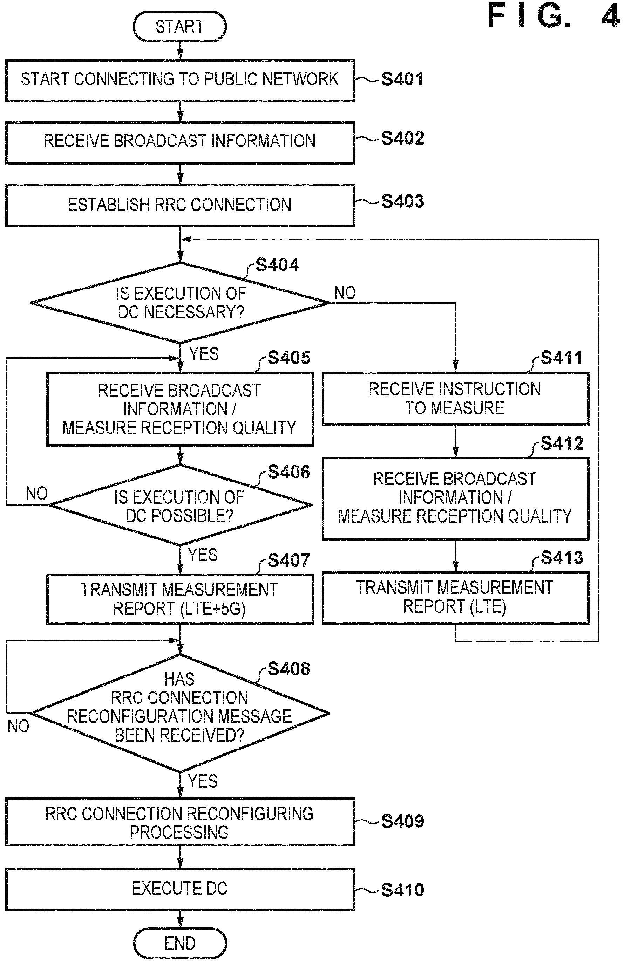

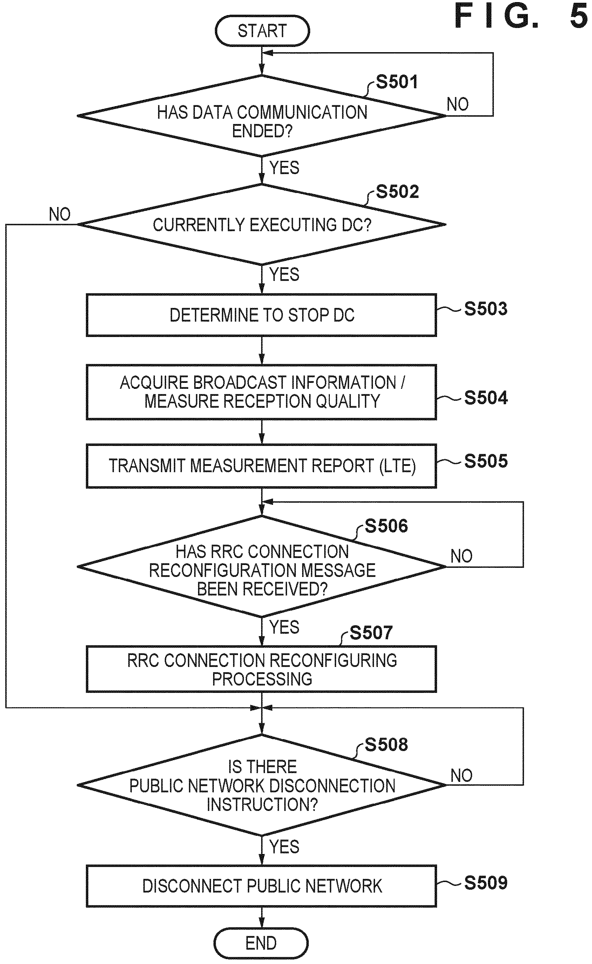

Next, the operation of the digital camera 301 according to the present embodiment will be described with reference to FIGS. 4 and 5. First, DC start processing performed by the digital camera 301 will be described. FIG. 4 is an operation flowchart of the DC start processing according to the present embodiment. First, the connection control unit 203 starts processing for connecting to a public network (network by the LTE base station 302/5G base station 303) (S401). Here, the connection control unit 203 starts the processing for connecting to the public network, for example, in response to an instruction given by the control unit 101. The control unit 101 may instruct the connection control unit 203 to star the connection processing, based on a user operation performed on the input unit 107. When the control unit 101 is executing an application for transferring captured image data, the control unit 101 may instruct the connection control unit 203 to start the connection processing at an appropriate timing in the program of the application being executed. Specifically, in S401, the connection control unit 203 controls the transmission unit 201 and the reception unit 202 so as to allow the digital camera 301 to perform communication using both the LTE and 5G communication systems.

Because the digital camera 301 is present in the cells of the LTE base station 302 and the 5G base station 303, the reception unit 202 then receives broadcast information from each of the LTE base station 302 and the 5G base station 303 (S402). After receiving broadcast information from each of the two base stations, the connection control unit 203 performs RRC connection processing for the LTE base station 302, and establishes an RRC connection with the LTE base station 302. Note that RRC is an abbreviation for radio resource control, which is a protocol for controlling a wireless network. After the RRC connection has been established, the transmission unit 201 transmits an attach request message (not shown) for authentication to the core network 304. Here, the transmission unit 201 may include, in the attach request message, information indicating that the apparatus supports the DC capability.

Then, in S404, the determination unit 204 determines whether or not execution of DC by the digital camera 301 is necessary. For example, the determination is performed based on the form (condition) of data transmission scheduled to be performed via the established RRC connection. Specifically, if the data transmission requires high-speed communication, the determination unit 204 may determine that execution of DC is necessary. The data transmission that requires high-speed data communication is a form of data transmission that requires time to complete the data communication if ordinary data communication is used, including, for example, uploading of a high-resolution image or a large amount of moving images. The determination unit 204 may also determine that execution of DC is necessary if the data transmission requires redundant communication using a plurality of communication paths. The data transmission that requires redundant communication using a plurality of communication paths is a form of data transmission, including, for example, real-time video transmission. As an implementation in which the above-described determination is performed based on the form (condition) of data transmission may be realized by the determination unit 204 determining, when the control unit 101 is executing an application for transferring captured image data, whether or not the application requires high-speed data communication, or whether or not the application requires redundant communication using a plurality of communication paths. Note that the determination performed by the determination unit 204 is not limited to those based on the form of data transmission. For example, the determination unit 204 may determine whether or not to execute DC, based on an instruction given by the user through the input unit 107. For example, whether DC is to be enabled or disabled may be allowed to be set on a UI configured by the display unit 104 and the input unit 107 functioning together, and the determination unit 204 may determine that execution of DC is necessary in response to the user setting DC to be enabled.

If the determination unit 204 determines that execution of DC is not necessary (No in S404), the reception unit 202 receives, in S411, from the LTE base station 302 serving as MN, an instruction to measure the reception quality (communication quality) for the signals from the base station around the digital camera 301. Consequently, the measurement unit 205 is activated. Then, when broadcast information is received by the reception unit 202 from the LTE base station 302 and the 5G base station 303, which are the surrounding base stations, the measurement unit 205 measures the reception quality of the signals of each of the base stations (each of the cells), based on the received broadcast information. For example, the measurement unit 205 measures the reference signal received power (RSRP), the reference signal received quality (RSRQ), and the signal-to-interference-plus-noise ratio (SINR). In S413, the transmission unit 201 transmits, as a measurement result, a measurement report including the reception quality measured in S412. Here, because it is determined that execution of DC in the digital camera 301 is not necessary (NO in S404), the transmission unit 201 includes only the reception quality of the LTE base station 302 in the measurement report to be transmitted. That is, the transmission unit 201 transmits the measurement report without including therein the reception quality of the 5G base station 303. If any LTE base station other than the LTE base station 302 is present around the digital camera 301, the transmission unit 201 may include the reception quality of the other LTE base station in the measurement report. If any 5G base station other than the 5G base station 303 is present around the digital camera 301, the transmission unit 201 does not also include the reception quality of the other 5G base station in the measurement report. After S413, the processing returns to S404, and the processing in S404, S411, S412, and S413 is repeated until it is determined that execution of DC is necessary. In parallel with this, the digital camera 301 may transmit captured image data to the LTE base station 302 via the established RRC connection.

On the other hand, if the determination unit 204 determines that execution of DC is necessary (YES in S404), the processing proceeds to S405. In S405, the reception unit 202 receives broadcast information from the base station around the digital camera 301, and the measurement unit 205 measures the reception quality. The processing in S405 is the same as the processing in S412, and therefore the description thereof is omitted. After the reception quality has been measured by the measurement unit 205, the DC control unit 206, in S406, analyzes the radio environment around the digital camera 301, and determines whether or not execution of DC by the digital camera 301 is possible. For example, the DC control unit 206 determines whether or not execution of DC is possible, based on whether or not broadcast information has been successfully received from the 5G base station 303 by the reception unit 202 in S405. In this case, the DC control unit 206 determines that execution of DC is possible if broadcast information has been successfully received from the 5G base station 303 by the reception unit 202 in S405. Note that the 5G base station is not limited to the 5G base station 303. If any 5G base station other than the 5G base station 303 is present in the surroundings, and the reception unit 202 can receive the broadcast information from the other 5G base station, the DC control unit 206 may determine that execution of DC is possible.

If it is determined that execution of DC is not possible (NO in S406), the processing returns to S405, and the reception unit 202 again attempts to receive the broadcast information from the surrounding base station. If it is determined that execution of DC is possible (YES in S406), the processing proceeds to S407. In S407, the transmission unit 201 transmits, as a measurement result, a measurement report including the reception quality to the base station. Here, because it is determined that execution of DC in the digital camera 301 is necessary (YES in S404), the transmission unit 201 transmits the measurement report by including therein the reception quality of the LTE base station 302 and the reception quality of the 5G base station 303. If any LTE base station other than the LTE base station 302 is present around the digital camera 301, the transmission unit 201 may include the reception quality of the other LTE base station in the measurement report. Similarly, if any 5G base station other than the 5G base station 303 is present around the digital camera 301, the transmission unit 201 may include the reception quality of the other 5G base station in the measurement report. After the transmission unit 201 has transmitted the measurement report, the processing proceeds to S408.

In S408, the reception unit 202 determines whether or not an RRC connection reconfiguration message has been received as a predetermined signal for reconfiguring the RRC connection. The RRC connection reconfiguration message here is a message transmitted by the LTE base station 302 to perform, in order to add the 5G base station 303 as a SN in DC, SN adding processing between the LTE base station 302 and the 5G base station 303, and reconfigure (reconstruct) the RRC connection after completion of the processing. When the reception unit 202 receives the RRC connection reconfiguration message (YES in S408), the processing proceeds to S409. In S409, the connection control unit 203 performs RRC connection reconfiguring processing by controlling the transmission unit 201 and the reception unit 202, and completes the RRC reconfiguration. When the connection control unit 203 completes the RRC connection reconfiguring processing, the transmission unit 201 transmits, as a complete message, an RRC connection reconfiguration complete message to the LTE base station 302. Then, the processing proceeds to S410, in which a random access procedure is performed as a synchronization establishing procedure between the digital camera 301 and the 5G base station 303, whereby the digital camera 301 can perform data communication using DC via the established RRC connection.

After the processing in S410, the display control unit 207 may notify the user that DC has been started by displaying the notification on the display unit 104 (or the UI configured by the display unit 104 and the input unit 107 functioning together). In this case, the display control unit 207 may provide the notification to the user using a pop-up on the display unit 104 or the UI, or provide the notification using an icon.

If it has been determined before the processing in S401 that execution of DC in the digital camera 301 is not necessary, the connection control unit 203, in S401, may control the transmission unit 201 and the reception unit 202 so as to allow the digital camera 301 to perform communication using only the LTE communication system. In this case, before the reception unit 202 performs the processing for receiving the broadcast information in S405, the connection control unit 203 may control the transmission unit 201 and the reception unit 202 so as to allow the digital camera 301 to perform communication using both the LTE and 5G communication systems.

Next, the DC stop processing performed by the digital camera 301 will be described. FIG. 5 is an operation flowchart of the DC stop processing according to the present embodiment. It is assumed that the digital camera 301 is performing data communication via a public network. First, the data transfer control unit 208 determines whether or not the data communication has ended (S501). For example, when the control unit 101 is executing an application for transferring captured image data, the data transfer control unit 208 may determine that the data communication has ended, at a suitable timing in the program of the application, or in response to completion of the application. The data transfer control unit 208 may determine that the data communication has ended, based on a user instruction to the input unit 107. If it is determined that the data communication has ended (YES in S501), the processing proceeds to S502.

In S502, the DC control unit 206 determines whether or not the digital camera 301 is executing DC. The DC control unit 206 may determine whether or not DC is being executed, for example, according to the state of the transmission unit 201 and the reception unit 202. If it is determined that DC is being executed (YES in S502), the processing proceeds to S503. If it is determined that DC is not being executed (NO in S502), the processing proceeds to S508. In S503, the DC control unit 206 determines to stop DC. In S503, rather than determining to stop DC, the DC control unit 206 may determine to continue DC, taking resumption of the data communication using DC into consideration. In that case, after resumption of the data communication, the digital camera 301 returns to S501 to perform the determination processing again.

In S504, the reception unit 202 receives broadcast information from the surrounding base station, and the measurement unit 205 measures the reception quality. The processing in S503 is the same as the processing in S412 of FIG. 4, and therefore the description thereof is omitted. In S505, the transmission unit 201 then transmits the measurement report to the base station. Here, because it is determined to stop DC in the digital camera 301 (S503), the transmission unit 201 transmits the measurement report by only including therein the reception quality of the LTE base station 302. That is, the transmission unit 201 transmits the measurement report without including therein the reception quality of the 5G base station 303. If any LTE base station other than the LTE base station 302 is present in the surrounding, the transmission unit 201 may include the reception quality of the other LTE base station in the measurement result. If any 5G base station other than the 5G base station 303 is present in the surroundings, the transmission unit 201 will not include the reception quality of the other 5G base station in the measurement result. Then, the processing proceeds to S506.

In S506, the reception unit 202 determines whether or not an RRC connection reconfiguration message has been received in the digital camera 301. The RRC reconfiguration message here is a message transmitted by the LTE base station 302 after completion of processing performed for cancelling registration as SN in DC for the 5G base station 303. When the reception unit 202 receives the RRC connection reconfiguration message (YES in S506), the processing proceeds to S507. In S507, the connection control unit 203 performs the RRC connection reconfiguring processing by controlling the transmission unit 201 and the reception unit 202, thus establishing an RRC connection only with the LTE base station 302. When establishment of the RRC connection is completed, the random access procedure is performed as a synchronization establishing procedure between the digital camera 301 and the LTE base station 302, whereby communication via the LTE base station 302 is performed. Then, the processing proceeds to S508.

After the processing in S507, the display control unit 207 may notify the user that DC has been stopped (that DC has been disconnected) by displaying the notification on the display unit 104 (or the UI configured by the display unit 104 and the input unit 107 functioning together). In this case, the display control unit 207 may provide the notification to the user using a pop-up on the display unit 104 or the UI, or provide the notification using an icon.

In S508, the connection control unit 203 determines whether or not a public network disconnection instruction is received. The connection control unit 203 may receive the public network disconnection instruction in accordance with a user instruction to the input unit 107. When the control unit 101 is executing an application for transferring captured image data, the public network disconnection instruction may be given to the connection control unit 203 at an appropriate timing in the program of the application being executed. The connection control unit 203 may determine that the public network disconnection instruction is received, based on the occurrence of some error or the like in the digital camera 301. In the state of S508, the processing may return to the processing for determining the necessity of execution of DC, which is the processing in S404 shown in FIG. 4. In this case, the processing in S405 to S410 will be performed when execution of DC becomes necessary again (YES in S404). If the connection control unit 203 receives the public network disconnection instruction (YES in S508), the connection control unit 203 performs processing for disconnecting connection with the public network (S509), and the public network connection of the digital camera 301 ends.

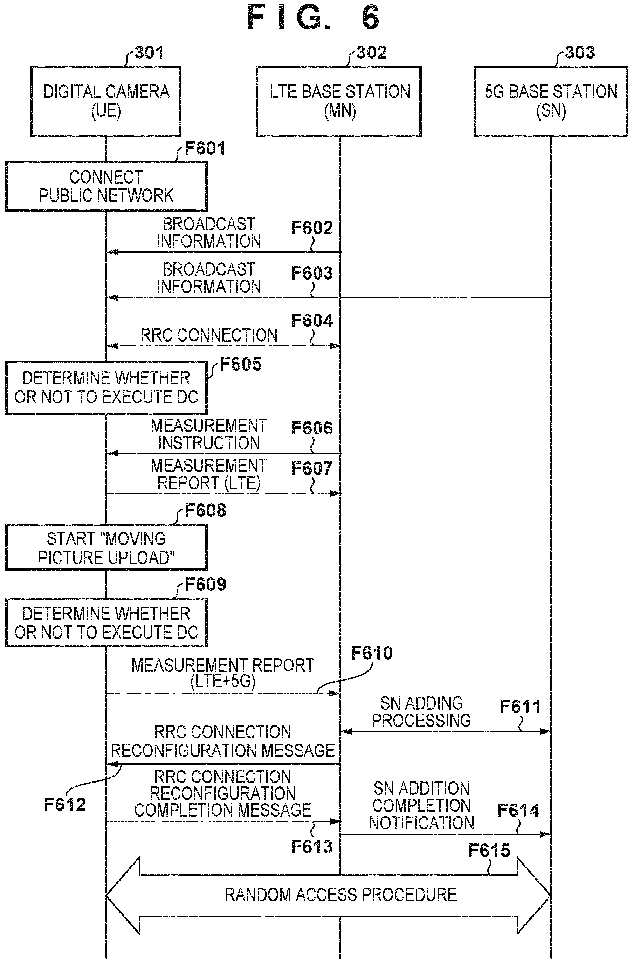

Next, the flow of signals during execution of DC according to the present embodiment will be described with reference to FIG. 6. FIG. 6 shows a processing operation sequence at the time of execution of DC performed between the digital camera 301 and the LTE base station 302 and the 5G base station 303. Note that FIG. 6 shows a sequence necessary to describe the present embodiment. Not all of the sequences relating to the public network connection are described, and some of the sequences are omitted in the drawing.

First, the digital camera 301 starts a public network connection (F601). In the present example, it is assumed that at the time when the digital camera 301 starts the public network connection, it is determined that execution of DC is not necessary. Then, the digital camera 301 receives the broadcast information (F602) from the LTE base station 302, and the broadcast information (F603) from the 5G base station 303. After receiving the broadcast information, the digital camera 301 connects to the LTE base station 302 by performing the RRC connection (F604) processing. After completion of the connection, the digital camera 301 transmits an attach request message (not shown) for authentication to the core network. Here, the digital camera 301 may transmit the attach request message by including therein the fact that the digital camera 301 supports the DC capability.

Next, the digital camera 301 determines whether or not execution of DC is necessary (F605). As described above, the digital camera 301 determines that execution of DC is not necessary at this point. Then, in response to receiving the measurement instruction (F606) relating to the reception quality of the base station around the digital camera 301 from the LTE base station 302 serving as the MN, the digital camera 301 measures the reception quality based on a subsequently received broadcast information (not shown, the same as those in F602, F603). After measuring the reception quality, the digital camera 301 transmits a measurement report including the reception quality (F607). Because the digital camera 301 determines that execution of DC is not necessary at this point, the digital camera 301 transmits the measurement report by including therein only measurement result of the reception quality of the LTE base station 302.

Upon receiving the measurement report from the digital camera 301, the LTE base station 302 analyzes the content of the measurement report on the core network 304 side. At that time, because the measurement report includes only the reception quality of the LTE base station 302, it is determined that the digital camera 301 cannot execute DC via the 5G base station 303. As a result, an instruction to start DC will not be notified to the digital camera 301 from the LTE base station 302 serving as the MN, and DC will not be executed.

Here, it is assumed that execution of a "moving picture upload" application (service) is instructed by the user on the digital camera 301, and execution of the application is started (F608). Because the "moving picture upload" application requires a large amount of data communication, the digital camera 301 determines that execution of DC is necessary. Then, the digital camera 301 receives broadcast information (not shown, the same as those in F602, F603) from the surrounding base station, measures the reception quality, and transmits a measurement report including the reception quality to the base station (F610). Because the digital camera 301 determines that execution of DC is necessary at this time, the digital camera 301 transmits a measurement report including the reception quality of the LTE base station 302 and the reception quality of the 5G base station 303.

Upon receiving the measurement report from the digital camera 301, the LTE base station 302 analyzes the content of the measurement report on the core network 304 side. At that time, because the measurement report includes the reception quality of the 5G base station 303 in addition to the reception quality of the LTE base station 302, it is determined that the digital camera 301 can execute DC via the 5G base station 303. Then, in order to add the 5G base station 303 as a SN, the LTE base station 302 performs the SN adding processing (F611) between the LTE base station 302 and the 5G base station 303. Upon completion of the SN adding processing, in order to reconstruct the RRC connection with the digital camera 301, the LTE base station 302 transmits an RRC connection reconfiguration message (F612) to the digital camera 301.

Upon receiving the RRC connection reconfiguration message, the digital camera 301 performs the RRC connection reconfiguring processing based on that message, whereby the reconstruction is completed. Upon completion of the reconstruction of the RRC connection, the digital camera 301 transmits, as a completion message, an RRC connection reconfiguration complete message (F613) to the LTE base station 302.

Upon receiving the RRC connection reconfiguration complete message from the digital camera 301, the LTE base station 302 notifies the 5G base station 303 that the addition as a SN is completed (F614). Upon completion of the processing for adding the 5G base station 303 as an SN in DC for the digital camera 301, the random access procedure (F615) is then performed as a synchronization establishing procedure. Thereafter, data communication using DC can be performed on the digital camera 301 via the LTE base station 302 and the 5G base station 303.

In the above-described description, after starting the public network connection in F601, execution of the "moving picture upload" application is started in F608. However, this order may be reversed. That is, the digital camera 301 may perform a public network connection after execution of the "moving picture upload" application has been started. In this case, the digital camera 301 determines the necessity of execution of DC upon connecting to the LTE base station 302, and transmits the measurement report by also including therein the reception quality of the 5G base station 303, upon determination that execution of DC is necessary. This allows the digital camera 301 to notify the LTE base station 302 that the digital camera 301 is in the state of capable of executing DC, immediately after connecting to the public network.

As described thus far, according to the present embodiment, as for the measurement report used to determine whether or not DC is executed on the base station side, the information included in the measurement report is changed based on the condition on the User Equipment (UE) side. Thus, the activation of DC by the base station can be controlled. Accordingly, DC can be executable only when DC is necessary on the UE side, and it is possible to reduce unnecessary power consumption as compared with when DC is constantly executed, thus improving the ease of use for the user.

### (Modification 1)

In the embodiment described above, the digital camera 301 transmits the measurement report upon determining that execution of DC is necessary. However, the timing for determining the necessity of execution of DC is not limited thereto. For example, the digital camera 301 may determine whether or not execution of DC is necessary each time when a measurement instruction is received from the LTE base station 302 serving as the MN. This make is possible to determine the necessity of execution of DC using, as a trigger for determining the necessity of execution of DC, not only the processing performed on the user equipment side, but also an instruction from the base station side.

### (Modification 2)

In the embodiment described above, the digital camera 301 transmits measurement report without including therein the reception quality of the 5G base station 303, if the digital camera 301 determines that execution of DC is not necessary. However, the operation performed when it is determined that execution of DC is not necessary is not limited thereto. For example, the digital camera 301 may notify the measurement result using a low value as the measurement value of the reception quality of the 5G base station 303 such that the LTE base station 302 as the MN determines not to execute DC. This allows the digital camera 301 to periodically notify the MN that the digital camera 301 supports the 5G communication.

### (Modification 3)

In the embodiment described above, the digital camera 301 transmits the measurement report to the LTE base station 302. However, the present invention is not limited thereto. For example, the digital camera 301 may transmit the measurement report to the LTE base station serving as the MN via the 5G base station 303 serving as the SN.

### (Modification 4)

In the above embodiment, a case where the MN is an LTE base station, and the SN is a 5G base station is described. However, the present invention is not limited thereto. The MN may be a 5G base station, and the SN may be an LTE base station. In that case, the 5G base station and the LTE base station according to the present embodiment can be applied by being replaced with each other.

### (Other Embodiments)

The present invention can be implemented by processing of supplying a program for implementing one or more functions of the above-described embodiments to a system or apparatus via a network or storage medium, and causing one or more processors in the computer of the system or apparatus to read out and execute the program. The present invention can also be implemented by a circuit (for example, an ASIC) for implementing one or more functions.

The present invention is not limited to the above embodiments and various changes and modifications can be made within the spirit and scope of the present invention. Therefore, to apprise the public of the scope of the present invention, the following claims are made.

This application claims priority from Japanese Patent Application No. 2018-196884 filed October 18, 2018 which is hereby incorporated by reference herein.

In addition to the examples and embodiments described before, the present application discloses the invention also in terms of feature combinations presented as the following 13 cases (claims of the parent application).

[CASE 1] A communication apparatus capable of performing data communication with one or more base stations, characterized by comprising:
determination means for determining whether or not to also perform communication with a secondary base station, in addition to a master base station, for the data communication;
measurement means for measuring a first quality, which is a quality of a signal received from the master base station, and a second quality, which is a quality of a signal received from the secondary base station; and
transmission means for transmitting a measurement report including the first quality and the second quality to the master base station in a case where it is determined by the determination means to also perform communication with the secondary base station, and transmitting a measurement report including the first quality and not including the second quality to the master base station in a case where it is determined by the determination means not to perform communication with the secondary base station.

[CASE 2] The communication apparatus according to case 1, characterized in that
the transmission means includes: establishing means for establishing a connection for the data communication with the secondary base station in response to receiving a predetermined signal from the master base station after transmitting the measurement report including the first quality and the second quality; and
starting means for starting the data communication after the connection for the data communication with the secondary base station has been established by the establishing means.

[CASE 3] The communication apparatus according to case 2, characterized by further comprising
first notification means for notifying, after a connection for the data communication with the secondary base station has been established, a user that the connection has been established.

[CASE 4] The communication apparatus according to case 2 or 3, characterized by further comprising
disconnection means for disconnecting, in a case where, after the data communication has been started by the starting means, the data communication ends, the connection for the data communication with the secondary base station.

[CASE 5] The communication apparatus according to case 4, characterized by further comprising
second notification means for notifying a user that the connection for the data communication with the secondary base station has been disconnected by the disconnection means.

[CASE 6] The communication apparatus according to any one of cases 1 to 5, characterized in that
the determination means determines whether or not to also perform communication with the secondary base station, based on an operation by a user.

[CASE 7] The communication apparatus according to any one of cases 1 to 5, characterized in that
the determination means determines whether or not to also perform communication with the secondary base station, based on a form of the data communication.

[CASE 8] The communication apparatus according to case 7, characterized in that,
in a case where the data communication requires high-speed communication, the determination means determines to also perform communication with the secondary base station.

[CASE 9] The communication apparatus according to case 7, characterized in that,
in a case where the data communication requires redundant communication using a plurality of communication paths, the determination means determines to also perform communication with the secondary base station.

[CASE 10] The communication apparatus according to any one of cases 1 to 9, characterized in that
the master base station is a base station capable of performing communication in accordance with an LTE communication system conforming to a 3GPP standard, and the secondary base station is a base station capable of performing communication in accordance with a 5G communication system conforming to the 3GPP standard.

[CASE 11] The communication apparatus according to any one of cases 1 to 10, characterized in that
the communication apparatus is a digital camera having an image capturing function, and the data is captured image data obtained by the image capturing function.

[CASE 12] A control method for communication apparatus capable of performing data communication with one or more base stations, the method characterized by comprising:
a determining step of determining whether or not to also perform communication with a secondary base station, in addition to a master base station, for the data communication;
a measurement step of measuring a first quality, which is a quality of a signal received from the master base station, and a second quality, which is a quality of a signal received from the secondary base station; and
a transmission step of transmitting a measurement report including the first quality and the second quality to the master base station in a case where it is determined in the determination step to also perform communication with the secondary base station, and transmitting a measurement report including the first quality and not including the second quality to the master base station in a case where it is determined in the determination step not to perform communication with the secondary base station.

[CASE 13] A program for causing a computer to function as the communication apparatus according to any one of cases 1 to 11.

## Claims

1. A communication apparatus (301) capable of performing communication with one or more base stations (302, 303), **characterized by** comprising:
reception means (202) for receiving information transmitted from a base station,
transmission means (201) for transmitting based on the received information, in a case where a first user setting is set to the communication apparatus (301), first information indicating a quality of a signal received from a base station of an LTE communication system conforming to a 3GPP (Third Generation Partnership Project) standard and second information indicating a quality of a signal received from a base station of a 5G communication system conforming to the 3GPP standard, to a main base station to which the communication apparatus establishes a connection, a base station of the LTE communication system conforming to the 3GPP, and
establishing means for establishing a connection for data communication with a secondary base station of the 5G communication system conforming to the 3GPP standard in response to receiving a predetermined signal from the master base station after transmitting the second information,
wherein in a case where a second user setting is set to the communication apparatus (301), the transmission means does not transmit the second information, to the main base station, indicating a quality of a signal received from the base station of the 5G communication system conforming to the 3GPP standard even in a case where the communication apparatus is located in a location near the base station of the 5G communication system conforming to the 3GPP standard.

2. The communication apparatus according to claim 1, **characterized by** further comprising
a user interface (107, 104), and
display control means for displaying a screen for receiving a first operation for setting the first user setting to the communication apparatus via the user interface.

3. The communication apparatus according to claim 2, **characterized in that**
the screen displayed by the display control means is a screen configured to receive a second operation for setting the second user setting to the communication apparatus.

4. The communication apparatus according to any one of claims 1 to 3, **characterized in that**
the first information includes one or more Reference Signal Received Quality (RSRP) which corresponds to the one or more base station.

5. The communication apparatus according to claim 4, **characterized in that**
the first information includes one or more reference signal received quality (RSRQ) which corresponds to the one or more base station.

6. The communication apparatus according to claim 4 or 5, **characterized in that**
the first information includes one or more Signal-to-Noise Ratio (SINR) which corresponds to the one or more base station.

7. The communication apparatus according to any one of claims 1 to 6, **characterized in that**
the first information is transmitted to the main base station as a measurement report.

8. The communication apparatus according to any one of claims 1 to 6, **characterized in that**
the second information is transmitted to the main base station as a measurement report.

9. The communication apparatus according to any one of claims 1 to 6, **characterized in that**
the transmission means transmits a measurement report including the first information and the second information to the main base station.

10. The communication apparatus according to any one of claims 1 to 9, **characterized by** further comprising an image capturing unit (108) that performs image capturing processing to generate captured image data.

11. A computer program comprising instructions which, when the computer program is executed by a communication apparatus (301) capable of performing communication with one or more base stations (302, 303), cause the communication apparatus to perform:
receiving information transmitted from a base station,
transmitting, based on the received information, in a case where a first user setting is set to the communication apparatus (301), first information indicating a quality of a signal received from a base station of an LTE communication system conforming to a 3GPP (Third Generation Partnership Project) standard and second information indicating a quality of a signal received from a base station of a 5G communication system conforming to the 3GPP standard, to a main base station to which the communication apparatus establishes a connection, a base station of the LTE communication system conforming to the 3GPP, and
establishing a connection for data communication with a secondary base station of the 5G communication system conforming to the 3GPP standard in response to receiving a predetermined signal from the master base station after transmitting the second information,
wherein in a case where a second user setting is set to the communication apparatus (301), the second information, to the main base station, indicating a quality of a signal received from the base station of the 5G communication system conforming to the 3GPP standard is not transmitted even in a case where the communication apparatus is located in a location near the base station of the 5G communication system conforming to the 3GPP standard.

12. The program according to claim 11, **characterized in that**
the communication apparatus comprises a user interface (107, 104), and
the computer program further causes the communication apparatus to perform displaying a screen for receiving a first operation for setting the first user setting to the communication apparatus via the user interface.

13. The computer program according to claim 12, **characterized in that**
the displayed screen is a screen configured to receive a second operation for setting the second user setting to the communication apparatus.

14. The computer program according to any one of claims 11 to 13, **characterized in that**
the first information includes one or more Reference Signal Received Quality (RSRP) which corresponds to the one or more base station.

15. The computer program according to claim 14, **characterized in that**
the first information includes one or more reference signal received quality (RSRQ) which corresponds to the one or more base station.

16. The computer program according to claim 14 or 15, **characterized in that**
the first information includes one or more Signal-to-Noise Ratio (SINR) which corresponds to the one or more base station.

17. The computer program according to any one of claims 11 to 16, **characterized in that**
the first information is transmitted to the main base station as a measurement report.

18. The computer program according to any one of claims 11 to 16, **characterized in that**
the second information is transmitted to the main base station as a measurement report.

19. The computer program according to any one of claims 11 to 16, **characterized in that**
a measurement report including the first information and the second information is transmitted to the main base station.

20. The computer program according to any one of claims 11 to 19,
**characterized in that** the communication apparatus further comprises an image capturing unit (108) that performs image capturing processing to generate captured image data.

21. A control method for communication apparatus (301) capable of performing communication with one or more base stations (302, 303), the method comprising:
receiving information transmitted from a base station, transmitting, based on the received information, in a case where a first user setting is set to the communication apparatus (301), first information indicating a quality of a signal received from a base station of an LTE communication system conforming to a 3GPP (Third Generation Partnership Project) standard and second information indicating a quality of a signal received from a base station of a 5G communication system conforming to the 3GPP standard, to a main base station to which the communication apparatus establishes a connection, a base station of the LTE communication system conforming to the 3GPP, and
establishing a connection for data communication with a secondary base station of the 5G communication system conforming to the 3GPP standard in response to receiving a predetermined signal from the master base station after transmitting the second information,
wherein in a case where a second user setting is set to the communication apparatus (301), the second information, to the main base station, indicating a quality of a signal received from the base station of the 5G communication system conforming to the 3GPP standard is not transmitted even in a case where the communication apparatus is located in a location near the base station of the 5G communication system conforming to the 3GPP standard.

22. The method according to claim 21, **characterized in that**
the communication apparatus comprises a user interface (107, 104), and
the method further comprising displaying a screen for receiving a first operation for setting the first user setting to the communication apparatus via the user interface.

23. The method according to claim 22, **characterized in that**
the displayed screen is a screen configured to receive a second operation for setting the second user setting to the communication apparatus.

24. The method according to any one of claims 21 to 23, **characterized in that**
the first information includes one or more Reference Signal Received Quality (RSRP) which corresponds to the one or more base station.

25. The method according to claim 24, **characterized in that**
the first information includes one or more reference signal received quality (RSRQ) which corresponds to the one or more base station.

26. The method according to claim 24 or 25, **characterized in that**
the first information includes one or more Signal-to-Noise Ratio (SINR) which corresponds to the one or more base station.

27. The method according to any one of claims 21 to 26, **characterized in that**
the first information is transmitted to the main base station as a measurement report.

28. The method according to any one of claims 21 to 26, **characterized in that**
the second information is transmitted to the main base station as a measurement report.

29. The method according to any one of claims 21 to 26, **characterized in that**
a measurement report including the first information and the second information is transmitted to the main base station.

30. The method according to any one of claims 21 to 29, **characterized in that**
the communication apparatus further comprises an image capturing unit (108) that performs image capturing processing to generate captured image data.

31. A communication apparatus (301) capable of performing communication with one or more base stations (302, 303), **characterized by** comprising:
reception means (202) for receiving information transmitted from a base station,
transmission means (201) for transmitting based on the received information, in a case where a first user setting is set to the communication apparatus (301), first information indicating a quality of a signal received from a base station of a first communication system conforming to a 3GPP (Third Generation Partnership Project) standard and second information indicating a quality of a signal received from a base station of a second communication system conforming to the 3GPP standard, to a main base station to which the communication apparatus establishes a connection, a base station of the first communication system conforming to the 3GPP, and
establishing means for establishing a connection for data communication with a secondary base station of the second communication system conforming to the 3GPP standard in response to receiving a predetermined signal from the master base station after transmitting the second information,
wherein in a case where a second user setting is set to the communication apparatus (301), the transmission means does not transmit the second information, to the main base station, indicating a quality of a signal received from the base station of the second communication system conforming to the 3GPP standard even in a case where the communication apparatus is located in a location near the base station of the second communication system conforming to the 3GPP standard,
wherein the second communication system is succeeding standard of the first communication system.
